# EUROPEAN PATENT APPLICATION

(11) **EP 4 588 567 A1**
(43) Date of publication of application: **23.07.2025**
(21) Application number: 24171985.5
(22) Date of filing: 23.04.2024
(51) Int. Cl.: B01L 1/00, G01N 21/77

(54) **BIOSENSOR SYSTEM AND METHOD FOR DETECTING A TARGET ANALYTE IN A FLUID SAMPLE**

(30) Priority: 28.12.2023 EP 23220487
(71) Applicant: IHP GmbH - Innovations for High Performance Microelectronics / Leibniz-Institut für innovative Mikroelektronik, 15236 Frankfurt (Oder) (DE)
(72) Inventor: Steglich, Patrick, 15236 Frankfurt (Oder) (DE); Mai, Andreas, 15236 Frankfurt (Oder) (DE)
(74) Representative: Eisenführ Speiser

(57) **Abstract**

The present invention relates to a biosensor system for detecting whether a target analyte is present in a fluid sample. The biosensor system comprises a carrier substrate and a biosensor. The carrier substrate has a carrier substrate front side and a carrier substrate back side and comprises a fluid sample reservoir that is accessible from the carrier substrate front side and configured for accommodating the fluid sample. The biosensor comprises a front-end-of-line, FEOL, and a back-end-of-line, BEOL. The biosensor is mounted with its FEOL in direct contact with the carrier substrate on the carrier substrate front side. The FEOL comprises at least one detector component that is arranged and configured for detecting whether the fluid sample reservoir accommodates a fluid sample that contains the target analyte and for providing an output signal indicative of whether the target analyte is present in the fluid sample.

## Description

### TECHNICAL FIELD

The present invention relates to a biosensor system and to a method for detecting whether a target analyte is present in a fluid sample. Furthermore, the present invention relates to a method of operating the biosensor system for detecting whether a target analyte is present in a fluid sample.

### BACKGROUND OF THE INVENTION

There exist various kinds of biosensors such as electrochemical biosensors, optical biosensors, electronic biosensors, piezoelectric biosensors, gravimetric biosensors, pyroelectric biosensors and magnetic biosensors.

An exemplary optical biosensor is disclosed in EP 3 671 187 A1. In particular, in EP 3 671 187 A1, a photonic sensor chip that comprises a semiconductor substrate having a front side and a back side is described. The photonic sensor chip includes a cavity extending from the back side through an entire depth of the semiconductor substrate, which is for example a silicon substrate. The cavity provides access to an active surface of a photonic particle sensor element from the back side of the semiconductor substrate. A photonic particle sensor element is arranged on the front side of the semiconductor substrate in a photonic plane in the photonic sensor chip's front-end-of-line (FEOL). The photonic particle sensor element comprises an active-surface element for capturing particles that is exposed for access from the back side of the semiconductor substrate. The active-surface element comprises a waveguide section of a waveguide, which waveguide serves for guiding an optical input wave in a defined manner to the active-surface element, and further for guiding a resulting optical output wave to a light detector, which is in this example a photodiode, of the photonic particle sensor element.

On the front side of the semiconductor substrate of the photonic sensor chip, electro-optical and electronic components are arranged in the FEOL, and an electrical interconnect stack in the photonic sensor chip's back-end-of-line (BEOL) is provided on top of the photonic plane. The electrical interconnect stack comprises electrical interconnects for conducting electrical operating power to the electro-optical and electronic components, including the light detector, and to conduct electronic signals to and from the electro-optical and electronic components to their respective destinations on chip or to an interface to external circuits components. The photonic sensor chips disclosed in EP 3 671 187 A1 enable an interaction between an analyte and a functionalized silicon waveguide and the simultaneous integration of electronic circuits on the chip top including the complete BEOL metallization layers.

Although the optical biosensor disclosed in EP 3 671 187 A1 already has several advantageous over other known biosensors such as that the fabrication steps required for forming the active-surface element can be performed separately from fabrication processes for manufacturing the photonic plane, i.e., the FEOL, and the BEOL on the front side of the semiconductor substrate, there is still an ongoing demand to provide further biosensors that, e.g., have an improved functionality, an improved reliability and/or an improved design, e.g., in terms of compactness.

### SUMMARY OF THE INVENTION

The present invention is based on the objective of providing an improved biosensor system for detecting whether a target analyte is present in a fluid sample. The present inventions is also based on the objective of providing an improved method of fabricating a biosensor system configured for detecting whether a target analyte is present in a fluid sample. Furthermore, the present invention is based on the objective of providing an improved method of operating a biosensor system for detecting whether a target analyte is present in a fluid sample.

According to the present invention, a biosensor system for detecting whether a target analyte is present in a fluid sample is proposed. The biosensor system comprises a carrier substrate and a biosensor. The carrier substrate has a carrier substrate front side and a carrier substrate back side and comprises a fluid sample reservoir that is accessible from the carrier substrate front side and configured for accommodating the fluid sample. The biosensor comprises a FEOL and a BEOL. The biosensor is arranged with its FEOL in direct contact with the carrier substrate on the carrier substrate front side. The FEOL comprises at least one detector component that is arranged and configured for detecting whether the fluid sample reservoir accommodates a fluid sample that contains the target analyte and for providing an output signal indicative of whether the target analyte is present in the fluid sample.

It is a characteristic feature of the proposed biosensor system that the biosensor's FEOL is in direct contact with the carrier substrate's front side. This means that the biosensor's FEOL and the carrier substrate share a common interface at which the biosensor's FEOL contacts the carrier substrate. The biosensor itself has no substrate but is loosely or fixedly mounted, e.g., attached, onto the carrier substrate. This is in contrast to known devices such as the photonic sensor chip disclosed in EP 3 671 187 A1 where the semiconductor substrate is an integral part of the photonic sensor chip. For example, the photonic sensor chip of EP 3 671 187 A1 may be further mounted onto a microfluidic structure.

Having a biosensor with no substrate leads to several advantages. For example, the biosensor can be combined with carrier substrates that are made from various different materials such as crystalline materials, polycrystalline materials, amorphous materials, rigid materials or flexible materials just to name a few. Thereby the biosensor system can be designed and configured for various different applications. That is the choice of the carrier substrate can be tailed to the specific application case and combined with the biosensor that is mounted thereto. Furthermore, the biosensor and the carrier substrate can be fabricated separately from each other with different techniques and combined afterwards to create the biosensor system. The biosensor system thus offers an increased freedom for its fabrication and the choice of materials that can be employed. In particular, the biosensor and the carrier substrate can be fabricated using techniques and materials involved that could not be used when fabrication the carrier substrate and the biosensor together.

Since the biosensor itself has no substrate, the biosensor system can also be fabricated to be comparatively thin, i.e., with a comparatively small thickness. Having a biosensor systern with a small thickness enables a compact design and an increased freedom for arranging further electronic or optoelectronic devices together with the biosensor system. For example, the biosensor system could be more easily integrated in a terminal device together with other components such as processors and data storage media. Preferably, the carrier substrate comprises a microfluidic structure. The microfluidic structure may comprises at least one microfluidic channel extending between a fluid inlet and a fluid outlet and being connected to the fluid sample reservoir such that the fluid sample can be transported from the fluid inlet to fluid sample reservoir and can be removed from the fluid sample reservoir through the fluid outlet. For example, the carrier substrate with the microfluidic structure can be realized by connecting a microfluidic substrate to a semiconductor substrate, e.g., by wafer bonding. The carrier substrate may also be fabricated directly with the microfluidic structure.

Alternatively to a microfluidic structure, the fluid sample reservoir may also be configured as a cavity that is accessible from the carrier substrate front side and that can be filled through an opening of the fluid sample reservoir present in the carrier substrate front side. In this case the fluid sample reservoir may be filled with the fluid sample from the carrier substrate front side, e.g., by introducing a drop of the fluid sample with a pipette or the like.

Alternatively, the fluid sample reservoir can may be configured as a cavity that is connected to a feedthrough connecting the cavity with the carrier substrate back side such that a fluid sample can be introduced into the fluid sample reservoir through the feedthrough from the carrier substrate back side.

Preferably, the FEOL and the BEOL of the biosensor have a combined thickness of 0.2 µm to 20 µm. That is, since the biosensor itself has no substrate, the biosensor can be comparatively thin. Having a comparatively thin biosensor allows mounting of the biosensor on flexible carrier substrates, e.g., plastically or elastically flexible carrier substrates. Such flexible carrier substrates may have a thickness 100 µm or more. For example, the flexible carrier substrate may be or may comprise conductive tracks and may be or may comprise a printed circuit board (PCB). On top of the PCB, a microfluidic structure may be arranged. A flexible carrier substrate may also be or comprise a flexible microfluidic structure. Such a flexible microfluidic structure may be fabricated using layer transfer and lamination, soft lithography, inkjet printing, and 3D printing. A flexible microfluidic structure may be made of or may comprise at least one of a polymer, a silicone elastomer, and a fabric material.

The FEOL may comprise several electronic, optoelectronic and/or photonic components, e.g., transistors, diodes, resistors, capacitors, photodiodes, photodetectors, optical waveguides, frequency converters and lasers. Photonic components may be active and/or passive photonic components may include in particular a laser, a light detector, an optical modulator for modulating intensity, phase or polarization of light, an optical switch, an optical delay element, an optical amplifier, or an optical frequency converter. Passive photonic components are in particular filters, splitters, combiners and isolators.

Preferably, the BEOL comprises at least two interconnect layer pairs each comprising a metal interconnect layer and an interlevel dielectric layer. Furthermore, the BEOL may include contact-tungsten plugs. Dielectric materials in the BEOL may include silicon nitride (SiₓN_{y}), SiO₂, aluminium nitride (AIN), aluminium oxide (AlₓO_{y}), in particular sapphire (Al₂O₃), aluminumoxynitride (AION) in any stoichiometry, hafnium oxide (HfOₓ), tantalum oxide Ta₂O₅, titanium oxide (TiOₓ), silicon oxynitride SiON, or zirconium oxide ZrOₓ. Unspecified stoichiometry, partly indicated by indices x and y in the above list of materials, express variability in the material design for the purpose of optimization of optical properties and ease of fabrication in a given context of desired application and fabrication technology.

Preferably, in the biosensor system, the detector component has a detector back side and a detector front side, wherein the FEOL is mounted onto the carrier substrate front side of the carrier substrate such that the detector component is arranged fully within the fluid sample reservoir. If the fluid sample reservoir is filled with a fluid sample, the detector component may be exposed to the fluid sample with both, its detector front side and its detector back side. Thereby, the sensitivity of the detector component can be increased. The BEOL is arranged on the FEOL front side and it is preferred that the BEOL covers at least 80 %, preferably, at least 90 % or at least 95 % or even at least 99 %. It is particularly preferred that the BEOL is arranged on the FEOL front side to completely cover by the FEOL front side.

Preferably, the biosensor has at least one lateral side with a length of 20 µm to 60 µm. The biosensor can have the shape of a disc, e.g., and can be round, rectangular or polygonal. Having at least one lateral side with a length of 20 µm to 60 µm is preferred since with these lengths, the biosensor can be reliably transferred to and mounted onto the carrier substrate using a micro transfer printing technique. In particular, a biosensor having at least one lateral side with a length of 20 µm to 60 µm can be detached from a fabrication substrate and transferred onto the carrier substrate via pick and place employing micro transfer printing.

The biosensor can be an optical biosensor and the detector component may be or may comprise a photodiode or a waveguide. It is also possible that the biosensor is an electrical biosensor and the detector component may be or may comprise a filed-effect transistor (FET) such as bio-FET.

In the biosensor system, it is particularly preferred that the detector component of the biosensor comprises a waveguide that is arranged and configured for guiding an optical input wave that can interact with the fluid sample accommodated in the fluid sample reservoir thereby generating an optical output wave as the output signal that is indicative of whether the target analyte is present in the fluid sample. The waveguide may have a ring resonator geometry. In alternative embodiments, the waveguide is a ring assisted Mach-Zehnder interferometer or a Fabry-Perot resonator with photonic crystals. All of these waveguides have the similarity that they provide an optical signal conveying the information on the detected analyte in a manner that is suitable for conversion into an electrical signal by the light detector. Further waveguide types that can be used include a strip waveguide, a slot waveguide, a rib waveguide or a strip-loaded slot waveguide. The waveguide may made of one or more of silicon, silicon nitride, silicon oxynitride or germanium. In the case of using silicon for the waveguide, either crystalline silicon, polysilicon or amorphous silicon can be used, depending on the requirements of the given application case. The biosensor may comprise at least one light source, e.g., a vertical-cavity surface-emitting laser source or a light-emitting diode, connected to the waveguide and configured to generate and emit the optical input wave. The light source may arranged in a photonic plane of the FEOL. Alternatively, the light source may be arranged in the interconnect stack, i.e., in the BEOL, or on top of the interconnect stack. It is also possible that the light source is attached to the biosensor by a bonding technique, for example, via die-to wafer or wafer-to-wafer bonding.

It is preferred that the detector component has a functionalized detector surface that is arranged and configured to detect whether the target analyte is present in the fluid sample by selective interaction. For example, the functionalized detector surface can be part of the waveguide and arranged and configured to interact with the analyte in the fluid sample present in the fluid sample reservoir. For providing a functionalized detector surface, different functionalization methods may be employed. For example, the functionalized detector surface is functionalized chemically. In exemplary embodiments of this kind, specific antibodies or ligands are covalently bonded to the functionalized detector surface. In other embodiments, the functionalized detector surface is functionalized physically. For instance, the surface of the detector component forming the functionalized detector surface may have a roughness suitable for capturing particles. The roughness can be established in the fabrication process by physical treatment of the functionalized detector surface, e.g., by ion bombardment. For example, silicon can be functionalized with organosilanes, which have an organic group at one end. For example, amino-propyl-triethoxisilane (APTES) 512 may be used to chemically react in a silanization with the functionalized detector surface made of silicon. APTES has an amino-group at the end, which is not bonded to silicon. The amino-group is covalently bonding biotin. Streptavidin molecules, which have a high affinity for biotin, are bonding to the biotin. Thus, a streptavidin layer can be formed. The streptavidin layer can bind a biotinylated anti-CRP-complex, such that the biosensor has a functionalized detector surface, which is suitable for specific detection of CRP molecules. Depending on the specification of the biosensor, other anti-complexes can be bonded.

It is possible that the biosensor is mounted onto the carrier substrate by means of an adhesion bond. An adhesion bond may comprise benzocyclobutene (BCB). Alternatively, the carrier substrate can be plasma-activated for mounting the biosensor. The biosensor could also be mounted onto the carrier substrate without any additional bonding means.

It may be beneficial, if the carrier substrate comprises or is made of a porous membrane or has a flat surface at the carrier substrate front side on which the biosensor is arranged. Employing a porous membrane can be advantageous in order to increase the sensitivity of the biosensor. A flat surface has the advantage that the biosensor can be reusable biosensors because they can be cleaned more easily.

In the biosensor system, it is possible that the biosensor is mounted within the fluid sample reservoir. When the fluid sample reservoir is filled with a fluid sample, the biosensor mounted within the fluid sample reservoir may be arranged fully within the fluid sample, i.e., the biosensor may covered with the fluid sample on all its sides. If the biosensor is mounted within the fluid sample reservoir, the biosensor may interact with a fluid sample accommodated in the fluid sample reservoir either on its front side, its back side or with both, its front side and back side. Having the biosensor mounted within the fluid sample reservoir may have the advantage an interaction area between biosensor and the fluidic sample can be increased. Thereby, it is possible to also increase the chance to detect an analyte inside the fluidic sample. Accordingly, the biosensor may be operated in a more reliable manner with increased sensitivity. For example, within the reservoir or at the carrier substrate back side, mounting posts may be arranged on which the biosensor can be mounted within the fluid sample reservoir.

It is particularly preferred that the biosensor is configured to detect whether the target analyte is present in the fluid sample by detecting a change in a refractive index. For example, the detector component may be or may comprise a waveguide and the evanescent field of an optical input wave may interact with the fluid sample accommodated within the fluid sample reservoir. A change in the refractive index caused by the presence of the analyte in the fluid sample may be detected via a modulation of the optical input wave caused by the change in the refractive index. The resulting modulated input optical wave may then be guided as an output optical wave to, e.g., a photodiode. Examples of biosensors that are configured for detecting a change in a refractive index indicative of a presence of an analyte in the fluid sample are photonic devices that allow the conversion of a refractive index change into an output signal. Detector components that can be used may be or may comprise Mach-Zehnder interferometers, ring resonators and Fabry-Perot resonators. Chipintegrated photonic sensors, such as optical ring resonators can contribute to major advances, e.g., in food diagnostics, environmental monitoring, veterinary diagnostics and medical technology through rapid and accurate analysis of a wide range of substances and offer the prospect of cost-effective on-site analysis.

It is possible that in the biosensor system, the biosensor comprises a reference sensor that is arranged and configured for detecting a change of an internal property such as a temperature or a mechanical stress of the biosensor. This reference sensor is arranged to not to interact with a fluid sample accommodated in the fluid sample reservoir. For example, this reference sensor may be configured to also detect a change in the refractive index and, for example, may be a further waveguide. For example, the reference sensor may be used for detecting a change in the refractive index caused by a change in temperature and/or by mechanical stress. A change in the refractive index caused by a change in temperature and/or by mechanical stress may also be detected by the detector component of the biosensor and may be falsely interpreted as being caused by the presence of an analyte in the fluid sample. By comparing the output signal provided by the detector component of the biosensor with a reference signal provided by the reference sensor it is thereby possible to verify whether the detector component indeed has detected a presence of an analyte in the fluid sample. When using a reference sensor in addition to the detector component it is thus possible to increase the reliability of the biosensor system. For the reference sensor operating as a temperature and/or mechanical stress sensor it is preferred to use a silicon waveguide in which the light is highly confined inside the silicon.

It is possible that the detector component of the biosensor is or comprises an ultrasonic sensor. In case biosensor is or comprises an ultrasonic sensor, the biosensor system can be used in mammography or skin cancer applications. That is, skin of patient may be exposed to laser light which causes skin cells to emit sound waves that can be detected with the ultrasonic sensor of the biosensor system.

The biosensor can be or can comprise an ultrasonic sensor and can be used for detecting ultrasound. Preferably, such a biosensor has a comparatively small thickness of 100 nm to 15 µm, preferably, of 200 nm to 1000 nm. The ultrasound can induce stress inside the biosensor and hence a measurable change of its refractive index. This enables the identification of particles through photoacoustic imaging, a biomedical imaging technique relying on the optoelastic effect. Laser pulses can be directed into biological tissues, where a portion of the energy is absorbed and transformed into heat. This process can induce a transient thermoelastic expansion, resulting in the emission of wideband, i.e., MHz, ultrasonic waves. The biosensor may then capture and detect these generated ultrasonic waves.

In some embodiments, the biosensor comprises a photodiode that is arranged and configured to detect light impinging on a FEOL front side or a FEOL back side. For example, an external light source may be employed for illuminating a fluid sample held within the fluid sample reservoir and the light traversing the fluid sample may be detected by the photodiode. It is particularly preferred that the photodiode is arranged and configured for detecting light traversing through the carrier substrate and the fluid sample reservoir. In this case, it is preferential that the carrier substrate is transparent for the wavelength of the light used.

Preferably, the biosensor system comprises an encapsulation layer that is arranged and configured for at least partly encapsulating the biosensor. With an encapsulation layer it may be possible to prevent the biosensor from mechanical damage. It may also be possible to use the encapsulation layer for fixing the biosensor onto the carrier substrate. For example, the encapsulation layer can be or may comprise a UV-cured resin. A UV-cured resin is preferred since it allows pre-processing the biosensor with captured molecules.

As mentioned before, it is a particular advantage of the biosensor system that the biosensor can be mounted to various different kinds of carrier substrates, e.g., on Si or glass. In this way, the biosensor can be easily co-integrated with a microfluidic structure, a light source and/or an electrical circuit. It is thus preferred that the carrier substrate is made of a semiconductor material such as Si or SiGe or is made of a glass material. For example, the carrier substrate may be made of or may comprise a plastic, glass, quartz or a semiconductor material, thus enabling an application-specific material selection for the carrier substrate. Preferably, in case of a semiconductor material, the carrier substrate is a silicon substrate, which for instance is formed from an industry-standard silicon wafer. In some embodiments, a waveguide is used as the detector component that is arranged on a local island-like silicon-on-insulator (SOI) structure that is embedded in the bulk of a silicon substrate. This allows flexibly combining the advantages of using an SOI substrate for the detector component and of using a silicon substrate for further microelectronic components and electrical connection lines.

According to the present invention, also a method of fabricating a biosensor system configured for detecting whether a target analyte is present in a fluid sample is proposed. The method comprises the steps of:
- providing carrier substrate having a carrier substrate front side and a carrier substrate back side and comprising a fluid sample reservoir that is accessible from the carrier substrate front side and configured for accommodating the fluid sample,
- providing a biosensor comprising a front-end-of-line, hereinafter called FEOL, and a back-end-of-line, hereinafter called BEOL, the FEOL comprising at least one detector component that is configured for detecting whether the target analyte is present in the fluid sample and for providing an output signal indicative of whether the target analyte is present in the fluid sample, and
- mounting the biosensor with its FEOL directly onto the carrier substrate front side such that the FEOL is in direct contact with the carrier substrate and the detector component is arranged for detecting whether the fluid sample reservoir accommodates a fluid sample that contains the target analyte.

In particular, with the proposed method, the biosensor system described herein can be fabricated. It is particularly preferred that in the method, the biosensor is mounted onto the carrier substrate using a micro transfer printing technique. Micro transfer printing has already been demonstrated for the transfer of III-V materials for the development of laser structures. Ge photodiodes have also been successfully transferred, as described by N. Ye et al., in "Transfer Print Integration of Waveguide-Coupled Germanium Photodiodes Onto Passive Silicon Photonic ICs," Journal of Lightwave Technology, vol. 36, no. 5, pp. 1249-1254, March, 2018, doi: 10.1109/JLT.2017.2777509.

Using micro transfer printing for mounting the biosensor with its FEOL directly onto the carrier substrate front side has the advantage that a comparatively thin biosensor with a thickness of 0.2 µm to 20 µm can be mounted onto the carrier substrate. In particular, micro transfer printing allows transferring a biosensor that itself has no substrate anymore onto the carrier substrate.

The micro transfer printing technique includes that the biosensor is prepared on a fabrication substrate, e.g., a wafer, so that the biosensor can be exposed and released by means of a polydimethylsiloxane (PDMS) stamp and transferred to a carrier substrate. As mentioned before, the carrier substrate with the fluid sample reservoir can comprise a porous membrane or a flat surface. Furthermore, a microfluidic structure can be integrated into the surface of the carrier substrate.

In particular, the micro transfer printing technique for transferring the biosensor may comprise the steps of:
- fabricating the biosensor on a fabrication substrate,
- picking up the biosensor with a stamp, e.g., a PDMS stamp from the fabrication substrate, and
- transferring the biosensor with the stamp from the fabrication substrate to the carrier substrate.

The micro transfer printing technique for transferring the biosensor may further comprise that - prior to picking up - the biosensor is locally exposed by etching such that the biosensor remains attached to the fabrication substrate at one or more tether structures.

For picking up the biosensor from the fabrication substrate, the stamp is brought into contact with the biosensor exposed by etching. The stamp is then moved away from the fabrication substrate at a speed sufficient to generate an adhesion force between the biosensor and the stamp sufficient to remove the biosensor. The stamp is preferably moved not only upwards but also laterally away from the fabrication substrate when picking up the biosensor.

According to the present invention, also a method of operating the biosensor system described herein is proposed. The method comprises the steps of:
- introducing a fluid sample into the fluid sample reservoir of the carrier substrate,
- detecting with the biosensor whether the target analyte is present in the fluid sample accommodated in the fluid sample reservoir, and
- providing an output signal with the biosensor that is indicative whether the target analyte is present in the fluid sample.

It shall be understood that the biosensor system of claim 1, the fabrication method of claim 13 and the operation method of claim 15 have similar and/or identical preferred embodiments, in particular, as defined in the dependent claims.

It shall be understood that a preferred embodiment of the present invention can also be any combination of the dependent claims or above embodiments with the respective independent claim.

These and other aspects of the invention will be apparent from and elucidated with reference to the embodiments described hereinafter.

### BRIEF DESCRIPTION OF THE DRAWINGS

In the following drawings:
- Fig. 1:: schematically and exemplary shows a biosensor system comprising a biosensor mounted with its FEOL onto a carrier substrate that has a fluid sample reservoir;
- Fig. 2:: schematically and exemplary shows a biosensor system comprising a biosensor mounted with its FEOL onto a carrier substrate that has a fluid sample reservoir which is connected via a feedthrough with a carrier substrate back side;
- Fig. 3:: schematically and exemplary shows a biosensor system comprising a biosensor mounted with its FEOL onto a carrier substrate that has a fluid sample reservoir which is part of a microfluidic structure comprising a microfluidic channel;
- Fig. 4:: schematically and exemplary shows a biosensor system comprising biosensor mounted onto a carrier substrate such that a detector component of a FEOL is arranged fully within the fluid sample reservoir of the carrier substrate;
- Fig. 5:: schematically and exemplary shows in a top view a biosensor comprising a ring resonator as a detector component and a waveguide as a further detector component arranged on a fabrication substrate;
- Fig. 6:: schematically and exemplary shows in a) the biosensor on the carrier substrate shown in Fig. 5 in a cross-sectional view and in b) the biosensor on the carrier substrate after under etching in a cross-sectional view;
- Fig. 7:: schematically and exemplary visualizes in a), b) c) and d) the steps for transferring the biosensor shown in Figs. 5 and 6 onto a carrier substrate using micro transfer printing;
- Fig. 8:: schematically and exemplary shows a in a top view a biosensor arranged on a fabrication substrate, the biosensor comprising a ring resonator as a detector component and a waveguide as a further detector component as well as a photodiode and metal contacts;
- Fig. 9:: schematically and exemplary shows a in a) the biosensor on the carrier substrate shown in Fig. 8 in a cross-sectional view and in b) the biosensor on the carrier substrate after under etching in a cross-sectional view;
- Fig. 10:: schematically and exemplary visualizes in a), b) c) and d) the steps for transferring the biosensor shown in Figs. 8 and 9 onto a carrier substrate using micro transfer printing;
- Fig. 11:: schematically and exemplary shows a in a top view a biosensor comprising a ring resonator as a detector component and a waveguide as a further detector component arranged on a fabrication substrate with additional support structures; and
- Fig. 12:: schematically and exemplary shows in a) and b) the biosensor on the carrier substrate shown in Fig. 11 in two different cross-sectional views.

### DETAILED DESCRIPTION OF EMBODIMENTS

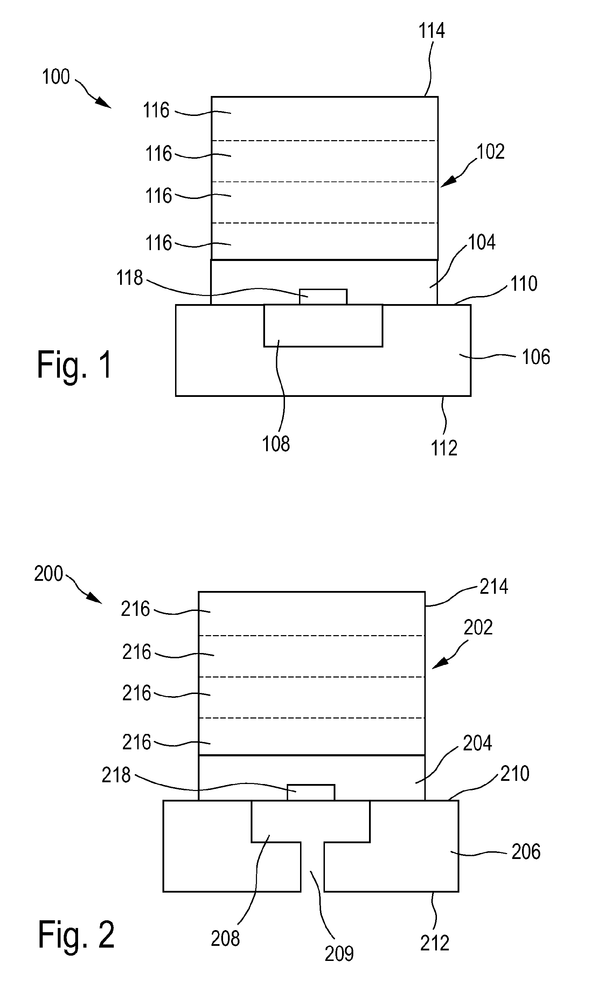

Figure 1 schematically and exemplary shows a biosensor system 100 for detecting whether a target analyte is present in a fluid sample. The biosensor system 100 comprises a biosensor 102 mounted with its FEOL 104 onto a carrier substrate 106 that has a fluid sample reservoir 108. The carrier substrate 106 has a carrier substrate front side 110 and a carrier substrate back side 112 and is made of a flexible material. Alternatively, the carrier substrate 106 could be made of a crystalline material such as a crystalline semiconductor material, a polycrystalline material such as a polycrystalline semiconductor material, an amorphous material such as glass. The fluid sample reservoir 108 that is accessible from the carrier substrate front side 110 and configured for accommodating a fluid sample. For example, a fluid sample can be filled into the fluid sample reservoir 108 by means of a pipette at a part that is not covered by the biosensor 102. Next to the FEOL 104, the biosensor 102 comprises a BEOL 114. The BEOL 114 comprises several interconnect layer pairs 116 each comprising a metal interconnect layer and an interlevel dielectric layer. A combined thickness of the FEOL and the BEOL is 2 µm. Yet, in other embodiments, a combined thickness of the FEOL and the BEOL may be 0.2 µm to 20 µm.

The biosensor 102 is mounted onto the carrier substrate 106 by means of an adhesion bond that comprises BCB. Yet, also other materials could be used for realizing the adhesion bond or no adhesion bond at all. That is, the biosensor 102 could also be mounted onto the carrier substrate 106 without any adhesion bond, e.g., the biosensor 102 could be loosely arranged on the carrier substrate 106.

The FEOL 104 is in direct contact with the carrier substrate 106 on the carrier substrate front side 110, i.e., there are no further layers in between FEOL 104 and the carrier substrate front side 110. In particular, the biosensor 102 itself comprises no substrate which is also a reason for the comparatively small thickness of the biosensor 102. For detecting whether a target analyte is present in a fluid sample, the FEOL 104 comprises at least one detector component 118 that is arranged and configured for detecting. The detector component 118 can be a waveguide or the like or FET. The detector component 118 is arranged to cover the fluid sample reservoir 118 at least partly, i.e., the detector component 118 and the fluid sample reservoir 118 share a common interface. Detecting whether a target analyte is present in a fluid sample particularly occurs due to the common interface. To enable a detection selectivity with regard to a specific analyte, the detector component 118 may have a functionalized detector surface that is arranged and configured to detect whether a target analyte is present in a fluid sample by selective interaction. Furthermore, the detector component 118 is configured for providing an output signal indicative of the detection result.

The biosensor 102 has the advantage that it has a comparatively small footprint. This small footprint can be realized since the electrodes and electrical contacts for electrical contacting of the FEOL 104 and optionally, also resistance heating elements can be arranged above the FEOL 104 in the BEOL. That is, the BEOL 114 covers the complete FEOL 104 of the biosensor 102. Having the BEOL 114 extending over the complete FEOL 104 allows arranging the metal contacts and electrode of the BEOL freely, also above any detector components of the FEOL 104 and any heating elements, if present. In contrast, often, in prior art devices, a channel needs to be provided through the BEOL to the FEOL, which can be avoided with the configuration of the biosensor system 100. The biosensor system 100 can be operated above room temperature to compensate for temperature fluctuations.

Figure 2 schematically and exemplary shows a biosensor system 200 comprising a biosensor 202 mounted with its FEOL 204 onto a carrier substrate 206 that has a fluid sample reservoir 208 which is connected via a feedthrough 209 with a carrier substrate back side 210. Via the feedthrough, a fluid sample can be filled into and removed from the fluid sample reservoir 208. Apart from the feedthrough 209, the biosensor system 200 is identical to the biosensor system 100 as described with reference to figure 1. Accordingly, the biosensor 202 also has a BEOL 214 and the FEOL 204 has a detector component 218. For further details of those components of the biosensor system 200 that are also present in the biosensor system 100 it is referred to the description of figure 1 wherein the same components have the same reference numerals except that the first digit "1" is changed to "2".

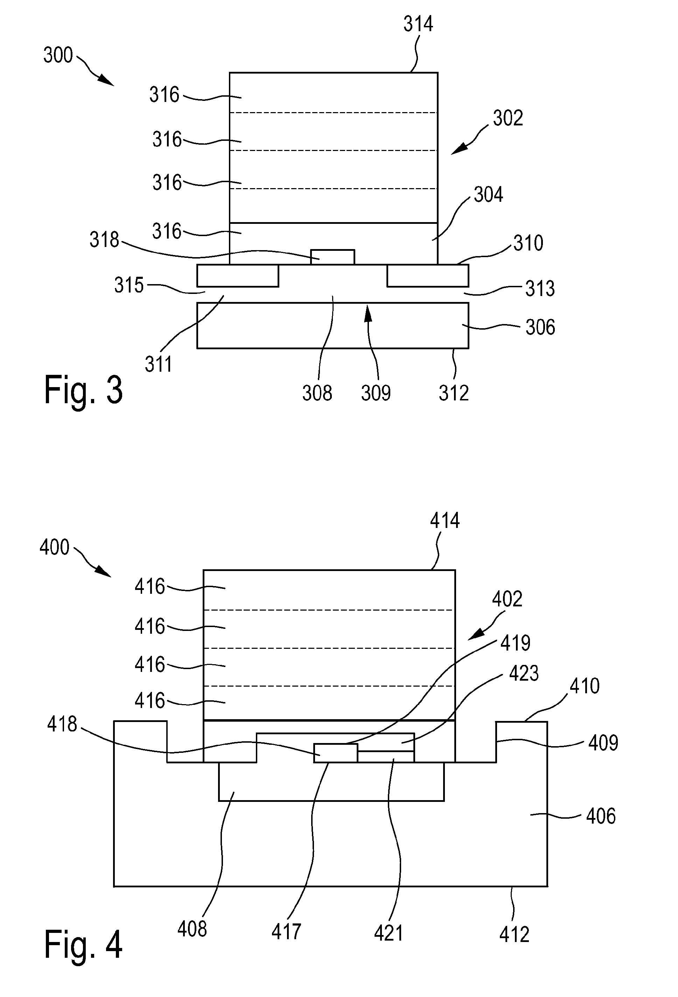

Figure 3 schematically and exemplary shows a biosensor system 300 comprising a biosensor 302 mounted with its FEOL 304 onto a carrier substrate306 that has a fluid sample reservoir 308 which is part of a microfluidic structure 309 comprising a microfluidic channel 311. The microfluidic channel 311 extends between a fluid inlet 313 and a fluid outlet 315 and is connected to the fluid sample reservoir 308 such that a fluid sample can be transported from the fluid inlet 313 to fluid sample reservoir 308 and removed from the fluid sample reservoir 308 through the fluid outlet 315. Further fluidic channels could be present depending on the respective application case. The microfluidic structure 309 is integrated into the carrier substrate 306. For example, the carrier substrate 306 could be made of glass or of a semiconductor material such as Si. It is also possible that the carrier substrate 306 is made of a flexible material and may optionally comprise a PCB.

Apart from the microfluidic structure 309, the biosensor system 300 is identical to the biosensor system 100 as described with reference to figure 1. Accordingly, the biosensor 302 also has a BEOL 314 and the FEOL 304 has a detector component 318. For further details of those components of the biosensor system 300 that are also present in the biosensor system 100, it is referred to the description of figure 1 wherein the same components have the same reference numerals except that the first digit "1" is changed to "3".

Figure 4 schematically and exemplary shows a biosensor system 400 comprising a biosensor 402 mounted onto a carrier substrate 406 such that the detector component 418 of the FEOL 404 is arranged fully within the fluid sample reservoir 408 of the carrier substrate 406. The fluid sample reservoir 408 has lateral side walls 409 that have a step-like shape that allows arranging the biosensor 402 so that the detector component 418 is positioned fully within the fluid sample reservoir 408. The detector component 418 has a detector back side 417 and a detector front side 419. Since the detector component is arranged fully within the fluid sample, both, its detector back side 417 and a detector front side 419 can be exposed to the fluid sample accommodated in the fluid sample reservoir 408. This is possible, since the detector component 418 is held by one or more anchoring structures 421 and apart from that are arranged within a cavity 423 within the FEOL 404.

Apart from the detector component 418 of the FEOL 404 being arranged fully within the fluid sample reservoir 408 of the carrier substrate 406, the biosensor system 400 has the same components as the biosensor system 100 as described with reference to figure 1. Accordingly, the biosensor 402 also has a BEOL 414 comprising several interconnect layer pairs 416 each comprising a metal interconnect layer and an interlevel dielectric layer. For further details of those components of the biosensor system 400 that are also present in the biosensor system 100, it is referred to the description of figure 1 wherein the same components have the same reference numerals except that the first digit "1" is changed to "4".

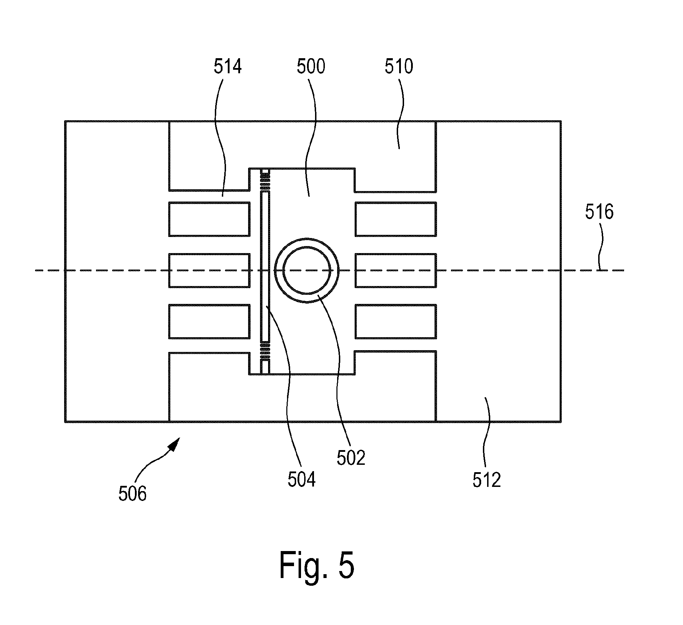

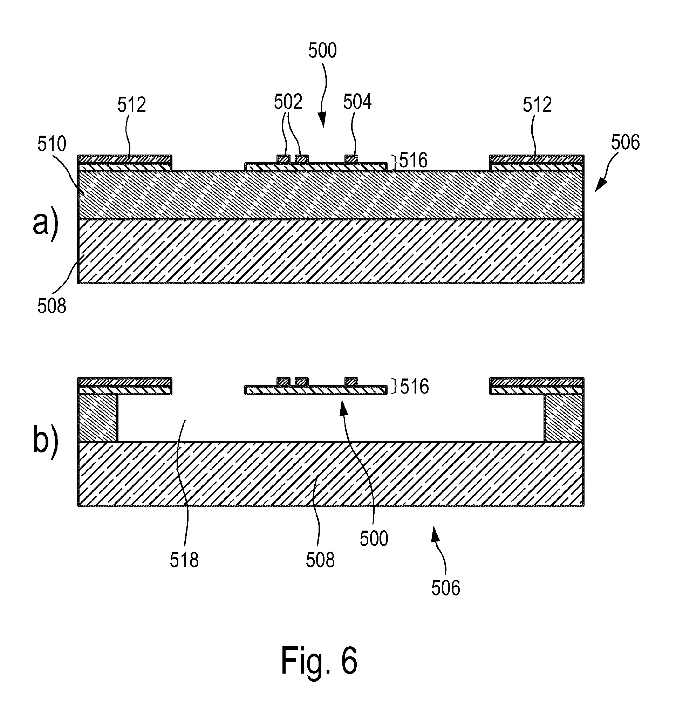

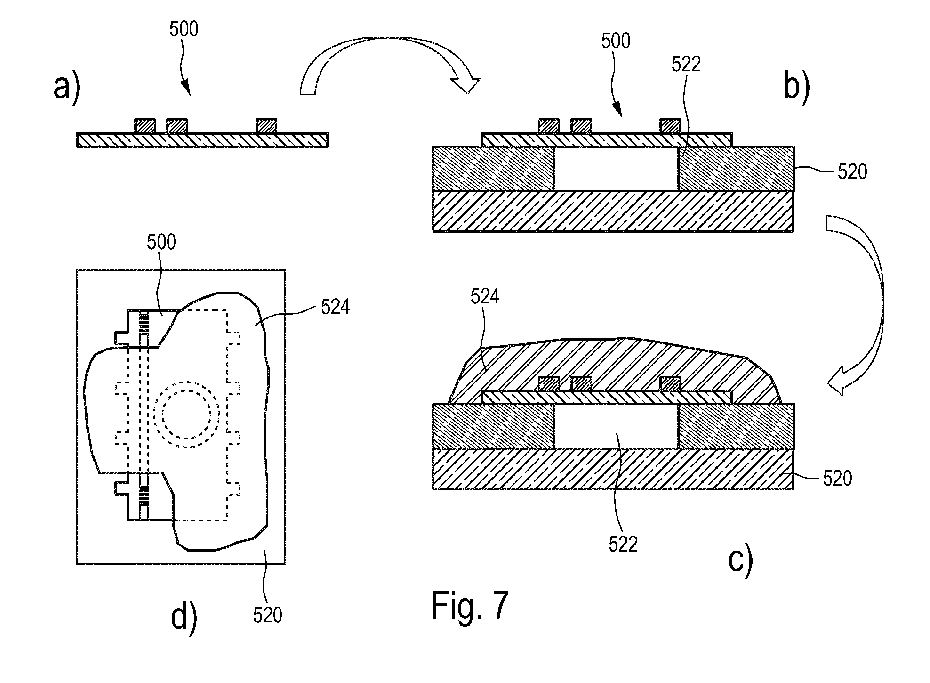

Figure 5 shows a Silicon-based biosensor 500. In particular, figure 5 schematically and exemplary shows in a top view a biosensor 500 comprising a ring resonator as a detector component 502 and a waveguide as a further detector component 504 arranged on a fabrication substrate 506. The fabrication substrate 506 comprises a Si wafer 508 (visible in figures 6 and 7) on which an oxide layer 510 is arranged. The biosensor 500 is fabricated from a Si layer 512 is still connected to the remaining Si layer 512 via several anchoring structures 514. Accordingly, also the ring resonator 502 as well as the waveguide 504 are made from Si.

Figure 6 schematically and exemplary shows in a) the biosensor 500 on the fabrication substrate 506 as depicted in figure 5 in a cross-sectional view taken along the dashed line 516 shown in figure 5. At this position, no anchoring structures 514 are present. In this view, the stacking order of the Si wafer 508, followed by the oxide layer 510 and the Si layer 512 comprising the biosensor 500 is visible. The biosensor 500 is only shown with its FEOL 516. Of course, the biosensor 500 may also have a BEOL arranged on the FEOL 516 which is not shown here.

Furthermore, in b), figure 6 shows the biosensor 500 on the fabrication substrate 506 after under etching in a cross-sectional view also taken along the dashed line 516 shown in figure 5. That is, via under etching parts of the oxide layer 510 below the biosensor 500 have been removed. Thereby, the biosensor 500 is exposed from the fabrication substrate 506 and only held in position by the anchoring structures 514. Accordingly, a cavity 518 is present below the biosensor 500.

Figure 7 schematically and exemplary visualizes in a), b) c) and d) the steps for transferring the biosensor 500 shown in figures 5 and 6 onto a carrier substrate 520 using micro transfer printing. In a), figure 7 shows the biosensor 500 as picked up with a stamp (not shown), e.g., a PDMS stamp. With the stamp, the biosensor 500 is transferred onto the carrier substrate 520 as shown in b) of figure 7. The carrier substrate 520 comprises a fluid sample reservoir 522 that can be filled with a fluid sample to detect with the biosensor 500 whether a target analyte is present in the fluid sample. In a next step, the biosensor 500 is covered with an encapsulation layer 524 as shown in c) of figure 7. As can be seen in the top view of figure 7 d), those parts of the waveguide 504 that serve for coupling a light wave into and out of the waveguide 504 are not covered by the encapsulation layer 524, for further contacting of the waveguide 504. Of course, in case a BEOL of the biosensor 500 would be shown to have a BEOL, the BEOL would be covered by the encapsulation layer 524 except for the contacting parts, e.g., metal contacting pads, electrodes etc. of the BEOL that would still not be covered by the encapsulation layer 524.

Using micro transfer printing for transferring the biosensor 500 from the fabrication substrate 505 to the carrier substrate 520 has the advantage that the biosensor can be relatively thin, i.e., with a thickness of 0.2 µm to 20 µm. Micro transfer printing this allows fabricating the biosensor 500 without having any substrate itself which results in the small total thickness. Using micro transfer printing has the further advantage that a relatively large interface between the biosensor and the fluid sample reservoir can be achieved. This, in turn, results in an increased detection area yield an improved sensitivity of the biosensor.

For example, more detector components or larger detector components could be used for achieving a further increased sensitivity. For example, a waveguide could be arranged in different spatial arrangements, e.g., in several branches, etc.

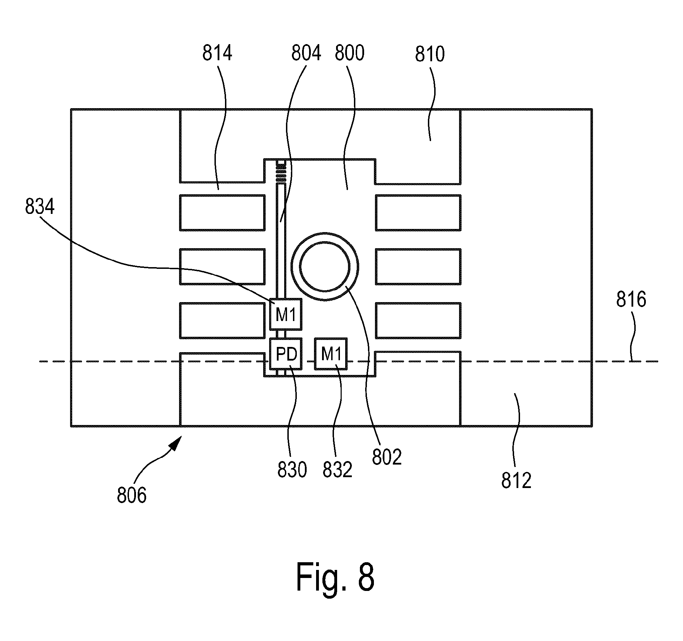

Figure 8 shows photonic-integrated-circuited (PIC)-based biosensor 800. In particular, figure 8 schematically and exemplary shows a in a top view a biosensor 800 arranged on a fabrication substrate 802. The biosensor 800 comprises a ring resonator as a detector component 804 and a waveguide as a further detector component 806. The fabrication substrate 806 is configured the same way as the fabrication substrate 506 described with reference to figures 5 to 7. Moreover, the ring resonator 804 and the waveguide 806 are configured the same way as the ring resonator 504 and the waveguide 506 of the biosensor 500. Therefore, the same reference numerals will be used for denoting identical components apart from that the first digit "5" is changed to "8" in figure 8. For further details about the configurations of these and further components and elements, it is referred to the description of figures 5, 6 and 7.

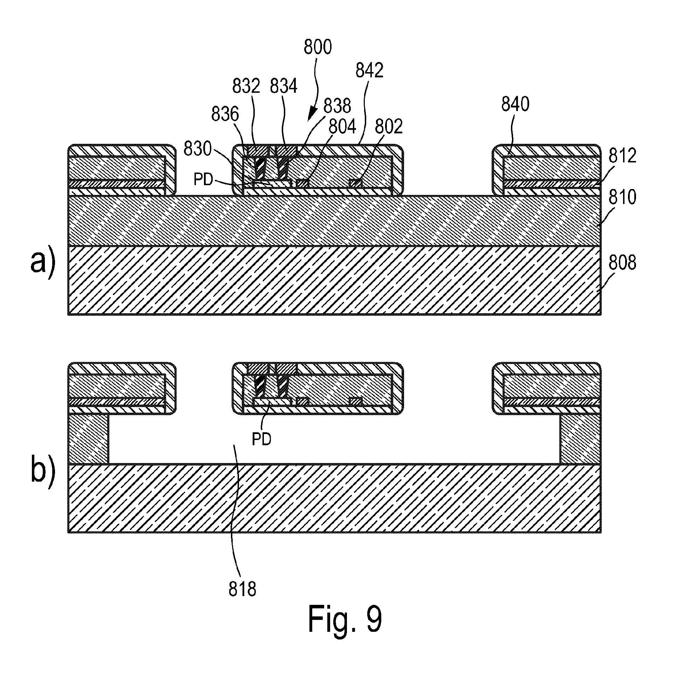

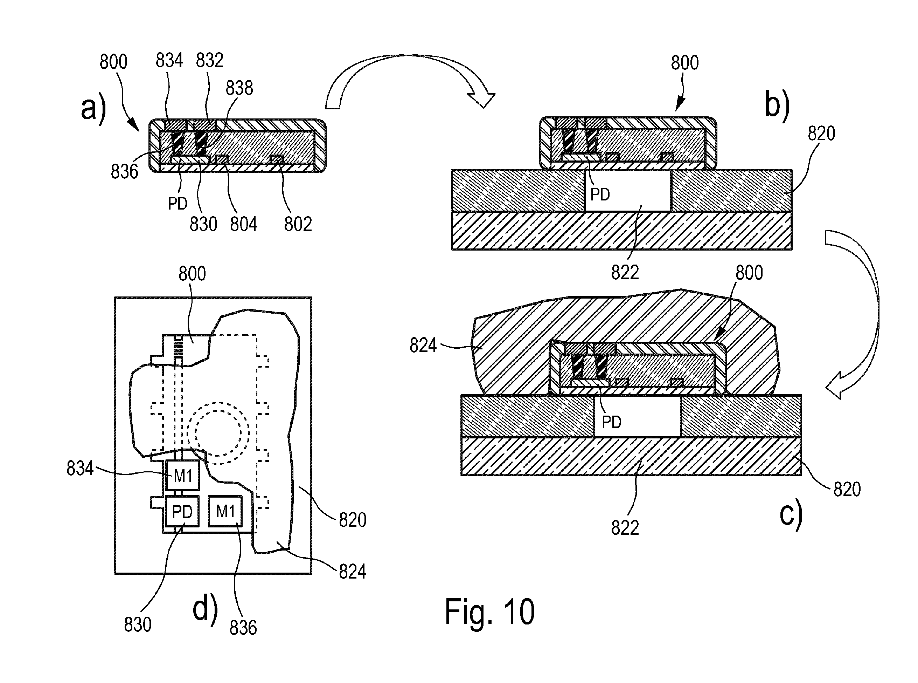

In addition, the biosensor 800 comprises a photodiode 830 that is coupled to the waveguide 506 for detecting an output light wave indicative of whether a target analyte is present in a fluid sample. Furthermore, the biosensor 800 comprises metal contact pads 832, 834 that are connected to the photodiode 830 by means of vias 836, 838 (visible in figures 9 and 10) for obtaining an electrical signal that has been generated by the photodiode 830 by conversion of a received output light wave.

Figure 9 schematically and exemplary shows in a), the biosensor 800 on the fabrication substrate 806 as described with reference to figure 8 in a cross-sectional view taken along the dashed line 816 shown in figure 8. As can be seen in this view, the biosensor 800 has the photodiode 830 coupled to the waveguide 804 and is connected with the vias 836, 838 to the metal contact pads 832, 834. The metal contact pads 832, 834 are embedded into a dielectric material layer to form a metal interconnect layer and are part of the first metal layer 840 of the biosensor 800. Of course further interconnect layer pairs each comprising a metal interconnect layer and an interlevel dielectric layer can be present as a BEOL arranged on top of the FEOL 842 of the biosensor 800.

In figure 9 b), the biosensor 800 on the fabrication substrate after under etching of the oxide layer 810 and in a cross-sectional view also taken along the dashed line 816 shown in figure 8. By means of the under etching, the oxide layer 810 below the biosensor 800 has been removed to expose the biosensor 800 from the fabrication substrate 806. Due to the under etching, a cavity 818 is created below the biosensor 500.The biosensor 800 is thus only held by anchoring structures 814 (visible in figure 8).

Figure 10 schematically and exemplary visualizes in a), b) c) and d) the steps for transferring the biosensor 800 described with reference to figures 8 and 9 onto a carrier substrate 820 using micro transfer printing. The micro transfer process for transferring the biosensor 800 can be realized similar to the micro transfer process for transferring the biosensor 500 as described with reference to figure 7. Accordingly, a stamp is used for picking up the biosensor 800 from the fabrication substrate 806 as visualized in figure 10 a) (the stamp is not shown). With the stamp, the biosensor 800 is then transferred to a carrier substrate 820 and placed such that the FEOL of the 842 of the biosensor 800 substantially covers a fluid sample reservoir 822 of the carrier substrate 820 as shown in figure 10 b). For mounting of the biosensor 800 onto the carrier substrate 820, an adhesion bond may be optionally employed. The fluid sample reservoir 822 can be part of a microfluidic structure with at least one microfluidic channel. Having mounted biosensor 800 onto carrier substrate 820, wire bonding is implemented and an encapsulation layer 824 is provided which results in the configuration shown in figure 10 c). As can be seen in figure 10 d) in more detail, the metal contact pads 832, 834 as well as the photodiode 830 are not covered by the encapsulation layer 824 to enable electrically connecting these components.

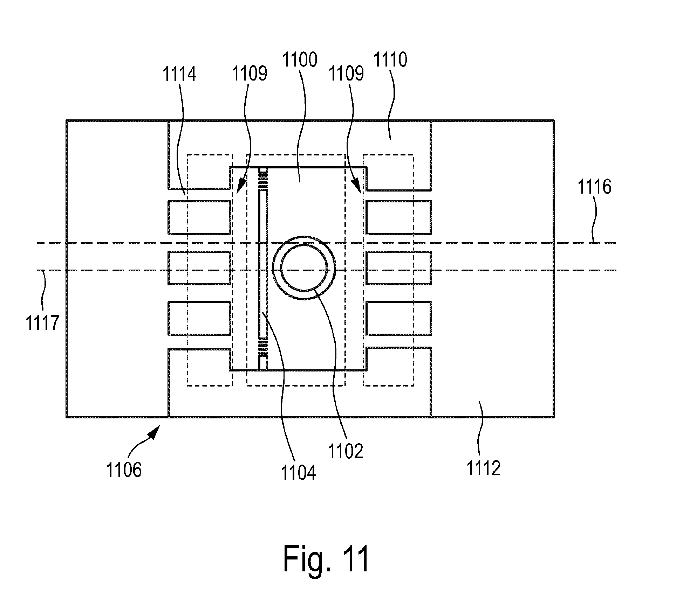

Figure 11 shows a Silicon-based biosensor 1100. In particular, figure 11 schematically and exemplary shows in a top view a biosensor 1100 comprising a ring resonator as a detector component 1102 and a waveguide as a further detector component 1104 arranged on a fabrication substrate 1106. The fabrication substrate 1106 is configured the same way as the fabrication substrate 506 described with reference to figures 5 to 7. Moreover, the ring resonator 1104 and the waveguide 1106 are configured the same way as the ring resonator 504 and the waveguide 506 of the biosensor 500. Therefore, the same reference numerals will be used for denoting identical components apart from that the first digit "5" is changed to "11" in figure 11. For further details about the configurations of these and further components and elements, it is referred to the description of figures 5, 6 and 7.

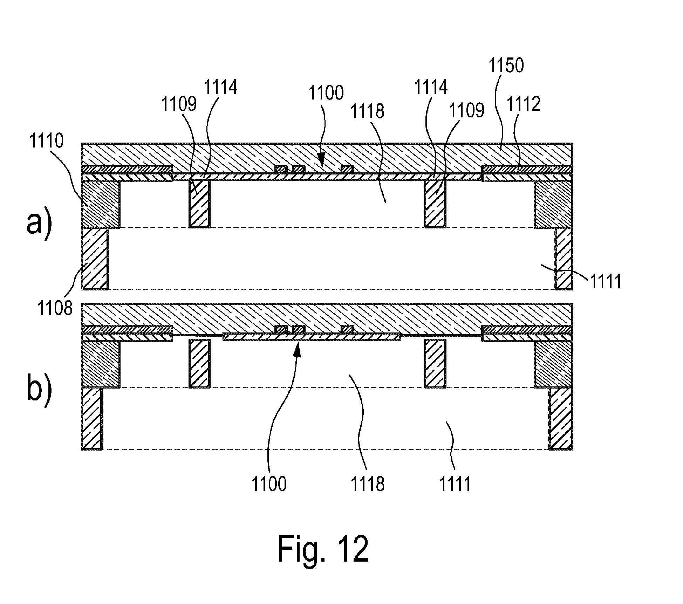

In addition, the fabrication substrate 1106 of the biosensor 800 comprises support structures 1109 indicated by the dashed lines in figure 11. The support structures 1109 are attached to the anchoring structures 1114 and to the Si wafer 1108 (visible in figure 12) and extend through the oxide layer 1110.

Figure 12 schematically and exemplary shows in a) and b) the biosensor 1100 on the carrier substrate 1106 as described with reference to figure 11 in two different cross-sectional views. In figure 12 a), a cross-sectional view long the dashed line 1116 as shown in figure 11 is depicted and in figure 12 b), a cross-sectional view long the dashed line 1117 as shown in figure 11 is depicted. In both views of figures 12 a) and b), it is visible that the fabrication substrate 1106 also comprises a back side release 1111. Furthermore, the oxide layer 1108 below the biosensor 1100 has been removed using under etching to expose the biosensor 1100.

As a result, as can be seen in figure 12 a), the support structures 1109 remain attached to the anchoring structures 1114. Where there is no anchoring structure 1114 present, the top of the support structures 1109 is not attached anymore as can be seen in figure 12 b). Parts of the support structures 1109 are also still in contact with the Si wafer 1108 where no back side release has been carried out. Thereby, the support structures 1109 further support the biosensor 1100 and may improve the reliability of the picking up of the biosensor 1100 with a stamp for the micro transfer printing process.

The biosensor 1100 is furthermore covered by a top oxide layer 1150 that serves for protecting the biosensor 1100. Alternatively, the biosensor 1100 may also comprise a BEOL on top of the FEOL.

Other variations to the disclosed embodiments can be understood and effected by those skilled in the art in practicing the claimed invention, from a study of the drawings, the disclosure, and the appended claims.

In the claims, the word "comprising" does not exclude other elements or steps, and the indefinite article "a" or "an" does not exclude a plurality.

The mere fact that certain measures are recited in mutually different dependent claims does not indicate that a combination of these measures cannot be used to advantage.

Any reference signs in the claims should not be construed as limiting the scope.

## Claims

1. A biosensor system for detecting whether a target analyte is present in a fluid sample, the biosensor system comprising:
- a carrier substrate having a carrier substrate front side and a carrier substrate back side and comprising a fluid sample reservoir that is accessible from the carrier substrate front side and configured for accommodating the fluid sample, and
- a biosensor comprising a front-end-of-line, hereinafter called FEOL, and a back-end-of-line, hereinafter called BEOL,
the biosensor being mounted onto the carrier substrate such that the FEOL is in direct contact with the carrier substrate on the carrier substrate front side, wherein the FEOL comprises at least one detector component that is arranged and configured for detecting whether the fluid sample reservoir accommodates a fluid sample that contains the target analyte and for providing an output signal indicative of whether the target analyte is present in the fluid sample.

2. The biosensor system according to claim 1, wherein the carrier substrate comprises a microfluidic structure, the microfluidic structure comprising at least one microfluidic channel extending between a fluid inlet and a fluid outlet and being connected to the fluid sample reservoir such that the fluid sample can be transported from the fluid inlet to fluid sample reservoir and can be removed from the fluid sample reservoir through the fluid outlet.

3. The biosensor system according to at least one of the preceding claims, wherein the FEOL and the BEOL of the biosensor have a combined thickness of 0.2 µm to 20 µm.

4. The biosensor system according to at least one of the preceding claims, wherein the BEOL comprises at least two interconnect layer pairs each comprising a metal interconnect layer and an interlevel dielectric layer.

5. The biosensor system according to at least one of the preceding claims, wherein the detector component has a detector back side and a detector front side, wherein the FEOL is mounted onto the carrier substrate front side of the carrier substrate such that the detector component is arranged fully within the fluid sample reservoir.

6. The biosensor system according to at least one of the preceding claims, wherein the biosensor is mounted onto the carrier substrate by means of an adhesion bond.

7. The biosensor system according to at least one of the preceding claims, wherein the detector component of the biosensor comprises a waveguide that is arranged and configured for guiding an optical input wave that can interact with the fluid sample accommodated in the fluid sample reservoir thereby generating an optical output wave as the output signal that is indicative of whether the target analyte is present in the fluid sample.

8. The biosensor system according to at least one of the preceding claims, wherein the detector component has a functionalized detector surface that is arranged and configured to detect whether the target analyte is present in the fluid sample by selective interaction.

9. The biosensor system according to at least one of the preceding claims, wherein the carrier substrate comprises or is made of a porous membrane or has a flat surface at the carrier substrate front side on which the biosensor is mounted.

10. The biosensor system according to at least one of the preceding claims, wherein the biosensor is mounted within the fluid sample reservoir.

11. The biosensor system according to at least one of the preceding claims, wherein the biosensor is configured to detect whether the target analyte is present in the fluid sample by detecting a change in a refractive index.

12. The biosensor system according to at least one of the preceding claims, wherein the biosensor comprises a reference sensor that is arranged and configured for detecting a change of an internal property of the biosensor.

13. A method of fabricating a biosensor system configured for detecting whether a target analyte is present in a fluid sample, the method comprising the steps of:
- providing carrier substrate having a carrier substrate front side and a carrier substrate back side and comprising a fluid sample reservoir that is accessible from the carrier substrate front side and configured for accommodating the fluid sample,
- providing a biosensor comprising a front-end-of-line, hereinafter called FEOL, and a back-end-of-line, hereinafter called BEOL, the FEOL comprising at least one detector component that is configured for detecting whether the target analyte is present in the fluid sample and for providing an output signal indicative of whether the target analyte is present in the fluid sample, and
- mounting the biosensor with its FEOL directly on the carrier substrate front side such that the FEOL is in direct contact with the carrier substrate and the detector component is arranged for detecting whether the fluid sample reservoir accommodates a fluid sample that contains the target analyte.

14. The method according to claim 13, in which the biosensor is mounted on the carrier substrate using a micro transfer printing technique.

15. A method of operating the biosensor system according to at least one of claims 1 to 12, the method comprising the steps of:
- introducing a fluid sample into the fluid sample reservoir of the carrier substrate,
- detecting with the biosensor whether the target analyte is present in the fluid sample accommodated in the fluid sample reservoir, and
- providing an output signal with the biosensor that is indicative whether the target analyte is present in the fluid sample.
